# EUROPEAN PATENT APPLICATION

(11) **EP 4 421 222 A1**
(43) Date of publication of application: **28.08.2024**
(21) Application number: 24150822.5
(22) Date of filing: 09.01.2024
(51) Int. Cl.: D01D 1/02, D01D 5/00, D01F 6/90, D01F 6/94

(54) **BREATHABLE AND WATERPROOF FILM**

(30) Priority: 10.01.2023 TW 112101080
(71) Applicant: TAIWAN TEXTILE RESEARCH INSTITUTE, New Taipei City (TW)
(72) Inventor: CHOU, Hsin-Ying, New Taipei City (TW); LIN, Yen-Hsi, New Taipei City (TW); CHANG, Haw-Jer, New Taipei City (TW)
(74) Representative: Winter, Brandl - Partnerschaft mbB

(57) **Abstract**

A breathable and waterproof film is fabricated by spinning and processing an electrospinning solution, in which the electrospinning solution includes a first additive and a second additive. The first additive includes a nylon copolymer and a first alcohol solvent. The second additive is prepared by a reaction of a composition in a second alcohol solvent, in which the composition includes a polysiloxane diol, a diol, and an isocyanate, and the diol includes an alkyl diol, a polyester diol, or a combination thereof.

## Description

### BACKGROUND

### Field of Disclosure

The present disclosure relates to a functional film, particularly relates to a breathable and waterproof film.

### Description of Related Art

In recent years, textile field has not only evolved in terms of design aesthetics but has also incorporated technology to enhance the functionality of clothing. Breathable and waterproof fabrics, as a type of functional fabric, can release moisture from the body surface and block external moisture from entering the fabric during wear, making them widely used in outdoor leisure clothing. A common approach for producing a breathable and waterproof fabric is to add water repellent agents to a breathable film and attach the film to the surface of breathable fabric. However, known water repellent agents often contain environmentally harmful fluorine, and achieving good water repellency without fluorine is challenging. Therefore, providing a breathable and waterproof fabric with both high breathability and water resistance is an actively researched topic in this field.

### SUMMARY

According to some embodiments of the present disclosure, a breathable and waterproof film is fabricated by electrospinning and processing an electrospinning solution, in which the electrospinning solution includes a first additive and a second additive. The first additive includes a nylon copolymer and a first alcohol solvent. The second additive is prepared by a reaction of a composition in a second alcohol solvent, in which the composition includes a polysiloxane diol, a diol, and an isocyanate, and the diol includes an alkyl diol, a polyester diol, or a combination thereof.

In some embodiments of the present disclosure, the alkyl diol is a C4 to C18 alkyl diol.

In some embodiments of the present disclosure, the isocyanate includes isophorone diisocyanate, hexamethylene diisocyanate, diphenyl methane diisocyanate, or combinations thereof.

In some embodiments of the present disclosure, a weight-average molecular weight of the polyester diol is 1000 Daltons to 3000 Daltons.

In some embodiments of the present disclosure, the composition further includes a chain extender, and the chain extender includes hydrazine, a diammonium sulfonate derivative, a hydroxyl diamine derivative, or combinations thereof.

In some embodiments of the present disclosure, the diammonium sulfonate derivative is sodium 2-[(2-aminoethyl)amino] ethanesulfonate.

In some embodiments of the present disclosure, each of the first alcohol solvent and the second alcohol solvent includes a C1 to C5 aliphatic alcohol.

In some embodiments of the present disclosure, an average pore diameter of the breathable and waterproof film is 0.5 micrometers to 1.5 micrometers, and an average fiber diameter of the breathable and waterproof film is not greater than 800 nanometers.

In some embodiments of the present disclosure, a water contact angle of the breathable and waterproof film is 100 degrees to 140 degrees.

In some embodiments of the present disclosure, a water pressure resistance value of the breathable and waterproof film is not less than 4000 mm water column, and a breathability of the breathable and waterproof film is not less than 0.5 cubic feet/minute.

According to the aforementioned embodiments of the present disclosure, the breathable and waterproof film is produced by electrospinning and processing an electrospinning solution. Through the preparation of the first additive in the electrospinning solution, nanofibers with appropriate fiber fineness are formed, enabling the breathable and waterproof film to have suitable pore sizes. Additionally, through the preparation of the second additive in the electrospinning solution, nanofibers with high water repellency and flexibility are formed. In this way, it contributes to enhancing the breathability, waterproofness, and flexibility of the breathable and waterproof film. Moreover, as the electrospinning solution does not contain harmful fluorine or toxic solvents, the resulting breathable and waterproof film is environmentally friendly.

### DETAILED DESCRIPTION

The present disclosure provides a breathable and waterproof film applicable to the textile field and manufactured by electrospinning and processing. Through adjustments in the ingredients of the electrospinning solution, the breathable and waterproof film can exhibit high breathability, waterproofness, and flexibility. Furthermore, since the electrospinning solution does not contain environmentally harmful fluorine or toxic solvents, the resulting breathable and waterproof film is environmentally friendly.

Specifically, the breathable and waterproof film of the present disclosure is produced by electrospinning and processing an electrospinning solution. For example, electrospinning can be performed on the electrospinning solution through an electrostatic spinning process to form interlaced and arranged nanofibers. These nanofibers are then pressed together through a heat-pressing process to create the breathable and waterproof film of the present disclosure. In the present disclosure, the electrospinning solution used to form the film includes a first additive and a second additive. Through the first additive and the second additive, the breathable and waterproof film can possess high breathability, waterproofness, flexibility, and environmental friendliness. Specifically, the first additive includes a nylon copolymer and a first alcohol solvent, and the second additive is obtained by a reaction of a composition in a second alcohol solvent. The composition includes a polydimethylsiloxane diol, a diol, and an isocyanate, in which the diol includes an alkyl diol, a polyester diol, or a combination thereof. The first additive and the second additive are detailed below.

Regarding the first additive, the nylon copolymer in the first additive can be used to form a base material of the breathable and waterproof film. In some embodiments, using a highly wear-resistant nylon copolymer as the base material results in good abrasion resistance of the breathable and waterproof film, making it suitable for outdoor functional clothing (e.g., hiking apparel). In some embodiments, the nylon copolymer can be a copolymer of co-polyamide and alkoxy-modified nylon 46/66, facilitating dissolution in the first alcohol solvent to enhance the electrospinnability of the electrospinning solution.

The first alcohol solvent in the first additive allows the electrospinning solution to be suitable for electrostatic spinning processes, such as needleless electrospinning, enabling rapid spinning to form interlaced and arranged nanofibers. In some embodiments, the first alcohol solvent includes a lower aliphatic alcohol (i.e., an alcohol with a carbon number of 1 to 5, C1 to C5), such as methanol, ethanol, propanol, or combinations thereof. This provides volatility. Also, the lower aliphatic alcohol well dissolves other components in the electrospinning solution, ensuring the electrospinning solution remains homogeneous and free from precipitation, which contributes to good electrospinnability to form nanofibers with suitable fiber fineness. For example, the solubility of the nylon copolymer in the first alcohol solvent can be 5 wt.% to 15 wt.%. In some preferred embodiments, ethanol is used as the first alcohol solvent, providing volatility, low toxicity, low corrosion, and environmental friendliness. In some embodiments, in the first additive, a content of the nylon copolymer can be 5 parts by weight to 15 parts by weight, and a content of the first alcohol solvent can be 85 parts by weight to 95 parts by weight. These ratios favor the formation of nanofibers with appropriate fiber fineness, further enhancing the breathability and waterproofness of the breathable and waterproof film.

Regarding the second additive, it is obtained by a chemical reaction of a composition in the second alcohol solvent. The composition includes a polydimethylsiloxane diol, a diol, and an isocyanate. Specifically, through the chemical reaction between the hydroxyl groups in the polydimethylsiloxane diol and the diol with the isocyanate groups in the isocyanate, a second additive with highly water repellency is formed. This second additive can react with the nylon copolymer in the first additive, and graft onto the surface of the nylon copolymer (i.e., the base material of the breathable and waterproof film), thereby forming a three-dimensional branched molecular structure. This enhances the water contact angle of the breathable and waterproof film, providing high waterproofness. In some embodiments, the water contact angle of the breathable and waterproof film can be 100 degrees to 140 degrees, achieving excellent waterproof performance. In some embodiments, a content of the polydimethylsiloxane diol is 30 parts by weight to 70 parts by weight, a content of the diol is 10 parts by weight to 30 parts by weight, and a content of the isocyanate is 100 parts by weight to 150 parts by weight. These ratios contribute to the formation of a second additive with a long straight-chain molecular structure and improve production efficiency (yield).

In some embodiments, the second alcohol solvent may include a lower aliphatic alcohol, such as methanol, ethanol, propanol, or combinations thereof. This provides volatility. The lower aliphatic alcohol facilitates the dissolution of other components in the electrospinning solution, ensuring the solution remains homogeneous and free from precipitation, which contributes to good electrospinnability to form nanofibers with suitable fiber fineness. In some preferred embodiments, the second alcohol solvent may be the same as the first alcohol solvent, reducing the complexity of the reaction and enhancing the convenience of subsequent processes (e.g., heat-pressing process). In some preferred embodiments, both the second alcohol solvent and the first alcohol solvent are ethanol, providing excellent solubility and reactivity for the ingredients in the first additive and the second additive.

Regarding the polydimethylsiloxane diol in the composition, the siloxane segments in polydimethylsiloxane diol can provide high hydrophobicity, high lipophobicity, and high-temperature resistance. In some embodiments, the polydimethylsiloxane diol can have a structure represented by formula (1): 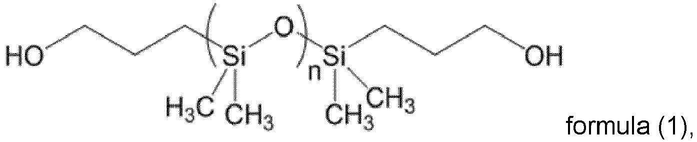 in which n can be an integer from 16 to 24. Based on the long-chain structure of formula (1), the second additive formed by the composition can have high hydrophobicity, contributing to improved waterproofness of the breathable and waterproof film. Additionally, since the polydimethylsiloxane diol has only two hydroxyl groups available for a reaction with the isocyanate, this helps to ensure that the resulting the second additive has a long straight-chain molecular structure. This facilitates the formation of a three-dimensional branched molecular structure after the second additive grafts onto the surface of the nylon copolymer, providing high water repellency.

Regarding the diol in the composition, the diol of the present disclosure includes alkyl diol, polyester diol, or a combination thereof, enhancing the overall reactivity of the composition. This also helps to extend the chain length of the second additive, enabling the formation of a three-dimensional branched molecular structure after the second additive grafts onto the surface of the nylon copolymer, thereby providing high water repellency. In some embodiments, the alkyl diol can be a C4 to C18 alkyl diol, aiding in extending the chain length of the second additive. Specifically, if the carbon number of the alkyl diol is less than 4, the effect of adding the alkyl diol to extend the chain length of the second additive is unobvious; if the carbon number of the alkyl diol is greater than 18, it may lead to excessive bending or entanglement of the chain, making it difficult to form a three-dimensional branched molecular structure after the second additive grafts onto the surface of the nylon copolymer. In some embodiments, the alkyl diol may be a straight-chain alkyl diol, such as 1,4-butanediol. Additionally, when the carbon number of the alkyl diol is higher (e.g., greater than 12), branched alkyl diol are preferred to reduce the possibility of excessive bending or entanglement of the chain, facilitating the formation of a three-dimensional branched molecular structure after the second additive grafts onto the surface of the nylon copolymer. In some embodiments, a weight-average molecular weight of the polyester diol can be 1000 Daltons to 3000 Daltons, providing better reactivity and aiding in extending the chain length of the second additive. Specifically, if the weight-average molecular weight of the polyester diol is less than 1000 Daltons, the effect of adding polyester diol to extend the chain length of the second additive is unobvious; if the weight-average molecular weight of the polyester diol is greater than 3000 Daltons, it may lead to insufficient reactivity. Similarly, since the diol have only two hydroxyl groups available for a reaction with the isocyanate, this helps to ensure that the resulting the second additive has a long straight-chain molecular structure. This facilitates the formation of a three-dimensional branched molecular structure after the second additive grafts onto the surface of the nylon copolymer, providing high water repellency.

Regarding the isocyanate in the composition, the isocyanates can react with the polydimethylsiloxane diol and the diol, forming the second additive with a long straight-chain molecular structure. In some embodiments, the isocyanate can be an aromatic isocyanate, such as diphenyl methane diisocyanate (MDI). In some other embodiments, the isocyanate can be an aliphatic isocyanate, such as isophorone diisocyanate (IPDI), hexamethylene diisocyanate (HDI), or a combination thereof. In some further embodiments, the isocyanate can be a combination of aliphatic and aromatic isocyanates. Similarly, since the isocyanate have only two isocyanate groups available for a reaction with the hydroxyl group in polydimethylsiloxane diol and the diol, this helps ensure that the resulting second additive has a long straight-chain molecular structure. This facilitates the formation of a three-dimensional branched molecular structure after the second additive grafts onto the surface of the nylon copolymer, providing high water repellency.

In some embodiments, the composition may also include a chain extender. The chain extender can form side branches on the main chain of the second additive, enabling the formation of a three-dimensional branched molecular structure after the second additive grafts onto the surface of the nylon copolymer, providing high water repellency. In some embodiments, the chain extender may include hydrazine, a diammonium sulfonate derivative, a hydroxyl diamine derivative, or combinations thereof. In some embodiments, the diammonium sulfonate derivative may be sodium 2-[(2-aminoethyl)amino] ethanesulfonate (trade name: EES-200L, purchased from TAIWAN HOPAX CHEMICALS MFG. CO., LTD.), in order to achieve better results. In some embodiments, the hydroxyl diamine derivative may be aminoethylethanolamine (AEEA).

Additionally, regarding the preparation method of the second additive, in some embodiments, the polydimethylsiloxane diol, the diol, and the isocyanate can be dissolved in ethanol, and the temperature can be raised to conduct a pre-polymerization reaction under the catalysis of a catalyst. Subsequently, the temperature is lowered, and an appropriate amount of acetone is added for dispersion. Next, the chain extender is added for chain extension. Then, ethanol (e.g., ethanol with a volume concentration greater than 95%) is added for dispersion, and acetone is removed by distillation to obtain the second additive dissolved in ethanol. Afterwards, the first additive and the second additive are mixed to form an electrospinning solution, and the electrospinning solution is used for spinning to obtain the breathable and waterproof film of the present disclosure.

Overall, through the first additive in the electrospinning solution, the electrospinning solution can form nanofibers with appropriate fiber fineness, providing suitable pore size (pore diameter) for the breathable and waterproof film. This aids in enhancing the breathability, waterproofness, and flexibility of the breathable and waterproof film. Through the second additive in the electrospinning solution, the electrospinning solution can form nanofibers with high water repellency and flexibility, further enhancing the breathability, waterproofness, and flexibility of the breathable and waterproof film. In other words, through the design at both the physical (fiber fineness and pore size) and chemical (water repellency of the material) aspect, the breathable and waterproof film of the present disclosure can simultaneously possess breathability, waterproofness, and flexibility. In some embodiments, an average pore diameter of the breathable and waterproof film may be 0.5 micrometers (µm) to 1.5 micrometers, and an average fiber diameter may not exceed 800 nanometers (nm). In some embodiments, a water pressure resistance value of the breathable and waterproof film may not be less than 4000 mm water column (mmH₂O), and an air permeability of the breathable and waterproof film may not be less than 0.5 cubic feet per minute (CFM). Additionally, the second additive of the present disclosure is fluorine-free, making it a non-fluorinated water repellent. Unlike conventional water-based non-fluorinated water repellents, the non-fluorinated water repellent of the present disclosure is ethanol-soluble, significantly shortening the subsequent heat treatment time, and also considering environmental friendliness.

In the following description, various evaluations will be conducted on the breathable and waterproof film disclosed herein to provide a concrete depiction of the efficacy of the present disclosure. It should be understood that, without exceeding the scope of this disclosure, appropriate modifications can be made to the materials used, their quantities and ratios, processing details, and treatment procedures, etc. Therefore, the present disclosure should not be interpreted restrictively by the embodiments provided below.

### <Experiment 1: Average Fiber Diameter of Nanofibers in Breathable and Waterproof Film>

In this experiment, a scanning electron microscope (SEM) was employed to observe the breathable and waterproof film of Example 1 at magnifications suitable for measurement (e.g., below 3000x, 4000x to 6000x, 10000x to 20000x). Multiple nanofibers were measured for their fiber diameter, and the average was calculated to obtain the average fiber diameter of the nanofibers in the breathable and waterproof film. The electrospinning solution used to prepare the breathable and waterproof film in Embodiment 1 included a copolymer of co-polyamide and alkoxy-modified nylon 46/66 and ethanol as the first additive. The composition used to form the second additive was reacted in ethanol, and the composition included polydimethylsiloxane diol represented by formula (1), 1,4-butanediol, and isophorone diisocyanate. The measurement results are shown in Table 1.

**Table 1**

| fiber diameter (nm) | 100-149 | 150-199 | 200-249 | 250-299 | 300-349 | 350-399 | 400-449 |
|---|---|---|---|---|---|---|---|
| fiber quantity (strip) | 0 | 0 | 2 | 30 | 15 | 5 | 2 |
| fiber proportion (%) | 0 | 0 | 4 | 60 | 30 | 10 | 4 |

Based on the results in Table 1, it is evident that the average fiber diameter of the nanofibers in the breathable and waterproof film of Embodiment 1 is approximately 283 nm. Moreover, nanofibers with a diameter ranging from 250 nm to 349 nm constitute up to 90% of the total, demonstrating that the nanofibers in the disclosed breathable and waterproof film have an appropriate average fiber diameter and a concentrated diameter distribution, thereby balancing breathability and waterproofness.

### <Experiment 2: Water Contact Angle Test of Breathable and Waterproof Film>

In this experiment, 0.006 mL of water was dropped onto a surface of the breathable and waterproof film of Embodiment 1 using a pipette. Subsequently, images of the image were captured, and the water contact angle of the breathable and waterproof film was measured. The result showed a water contact angle of 131 degrees, indicating that the disclosed breathable and waterproof film possesses a certain degree of waterproofness.

### <Experiment 3: Breathability Test of Breathable and Waterproof Film>

In this experiment, the breathability of the breathable and waterproof film of Embodiment 1 was tested using the standard ASTM D737 method. The test results revealed a breathability of 1.8 cubic feet per minute (CFM), significantly surpassing the breathability of many commercially available breathable and waterproof films (0.5 CFM).

### <Experiment 4: Waterproofness (Water Resistance) Test of Breathable and Waterproof Film>

In this experiment, the breathable and waterproof film of Embodiment 1 was applied to a nylon base cloth with a basis weight of 15 gsm, and subjected to five water pressure resistance tests using the standard method JISL1092. Additionally, water vapor resistance was tested using the standard method CNS 15102 L3256. The results showed that the water pressure resistance values of the breathable and waterproof film were all greater than 4000 mm water column, and the water vapor resistance value was 2, indicating a high waterproof performance.

### <Experiment 5: Rainwater Permeability Test of Breathable and Waterproof Film>

In this experiment, the breathable and waterproof film of Embodiment 1 was applied to a nylon base cloth with a basis weight of 10 gsm, and a rainwater permeability test was conducted using the standard method AATCC35. The result showed a rainwater permeability of 0.2 g, which is significantly better than the standard (1 g), showing that the disclosed breathable and waterproof film effectively prevents penetration by rainwater.

### <Experiment 6: Flexibility Test of Breathable and Waterproof Film>

In this experiment, the flexibility of the breathable and waterproof film of Embodiment 1 was tested using the standard method CNS5610, resulting in a flexibility of 1 Newton per centimeter (N/cm). Additionally, the breathable and waterproof film of Embodiment 1 applied to a nylon base cloth with a basis weight of 10 gsm was subjected to flexibility testing using the standard method CNS12915, resulting in a flexibility of 2 N/cm. This indicates that the disclosed breathable and waterproof film exhibits excellent flexibility.

### <Experiment 7: Water Fastness Test of Breathable and Waterproof Film>

In this experiment, the breathable and waterproof film of Embodiment 1 was applied to a nylon base cloth with a basis weight of 20 gsm, and a water fastness test was conducted using the standard method AATCC135. The results of the water fastness test, including water pressure resistance values and breathability after washing, are shown in Table 2.

**Table 2**

| | Before washing | After 50 times of washing |
|---|---|---|
| water pressure resistance value (mmH₂O) | 11550 | 9570 |
| breathability (CFM) | 1.8 | 1.76 |

Table 2 demonstrates that the breathable and waterproof film applied to the nylon base cloth maintains excellent waterproofness and breathability even after undergoing 50 cycles of water washing. This indicates that the disclosed breathable and waterproof film possesses remarkable water fastness, thus exhibiting broad applicability.

According to the aforementioned embodiments of the present disclosure, the breathable and waterproof film is produced by electrospinning and processing an electrospinning solution. Through the preparation of the first additive in the electrospinning solution, nanofibers with appropriate fiber fineness are formed, enabling the breathable and waterproof film to have suitable pore sizes. Additionally, through the preparation of the second additive in the electrospinning solution, nanofibers with high water repellency and flexibility are formed. In this way, it contributes to enhancing the breathability, waterproofness, and flexibility of the breathable and waterproof film. Moreover, as the electrospinning solution does not contain harmful fluorine or toxic solvents, the resulting breathable and waterproof film is environmentally friendly.

## Claims

1. A breathable and waterproof film, **characterized by** being fabricated by electrospinning and processing an electrospinning solution, wherein the electrospinning solution comprises:
a first additive comprising a nylon copolymer and a first alcohol solvent; and
a second additive prepared by a reaction of a composition in a second alcohol solvent, wherein the composition comprises:
a polydimethylsiloxane diol;
a diol comprising an alkyl diol, a polyester diol, or a combination thereof; and
an isocyanate.

2. The breathable and waterproof film of claim 1, **characterized in that** the alkyl diol is a C4 to C18 alkyl diol.

3. The breathable and waterproof film of any one of claims 1 to 2, **characterized in that** the isocyanate comprises isophorone diisocyanate, hexamethylene diisocyanate, diphenyl methane diisocyanate, or combinations thereof.

4. The breathable and waterproof film of any one of claims 1 to 3, **characterized in that** a weight-average molecular weight of the polyester diol is 1000 Daltons to 3000 Daltons.

5. The breathable and waterproof film of any one of claims 1 to 4, **characterized in that** the composition further comprises a chain extender, and the chain extender comprises hydrazine, a diammonium sulfonate derivative, a hydroxyl diamine derivative, or combinations thereof.

6. The breathable and waterproof film of claim 5, **characterized in that** the diammonium sulfonate derivative is sodium 2-[(2-aminoethyl)amino] ethanesulfonate.

7. The breathable and waterproof film of any one of claims 1 to 6, **characterized in that** each of the first alcohol solvent and the second alcohol solvent comprises a C1 to C5 aliphatic alcohol.

8. The breathable and waterproof film of any one of claims 1 to 7, **characterized in that** an average pore diameter of the breathable and waterproof film is 0.5 micrometers to 1.5 micrometers, and an average fiber diameter of the breathable and waterproof film is not greater than 800 nanometers.

9. The breathable and waterproof film of any one of claims 1 to 8, **characterized in that** a water contact angle of the breathable and waterproof film is 100 degrees to 140 degrees.

10. The breathable and waterproof film of any one of claims 1 to 9, **characterized in that** a water pressure resistance value of the breathable and waterproof film is not less than 4000 mm water column, and a breathability of the breathable and waterproof film is not less than 0.5 cubic feet/minute.
